# EUROPEAN PATENT SPECIFICATION

(11) **EP 4 410 524 B1**
(45) Date of publication and mention of the grant of the patent: **22.07.2026**
(21) Application number: 24153894.1
(22) Date of filing: 25.01.2024
(51) Int. Cl.: B29C 65/18, B65B 51/30, B29C 65/08, B29C 65/36, B65B 9/20, B65B 51/26, B65B 51/22, B29L 31/00

(54) **PACKAGE FORMING APPARATUS FOR A PACKAGING MACHINE AND PACKAGING MACHINE FOR FORMING PACKAGES FILLED WITH A POURABLE PRODUCT**
VORRICHTUNG ZUR HERSTELLUNG VON VERPACKUNGEN FÜR EINE VERPACKUNGSMASCHINE UND VERPACKUNGSMASCHINE ZUM FORMEN VON MIT EINEM FLÜSSIGEN PRODUKT GEFÜLLTEN VERPACKUNGEN
APPAREIL DE FORMATION D'EMBALLAGES POUR UNE MACHINE D'EMBALLAGE ET MACHINE D'EMBALLAGE POUR FORMER DES EMBALLAGES REMPLIS D'UN PRODUIT VERSABLE

(30) Priority: 01.02.2023 IT 202300001599
(43) Date of publication of application: 07.08.2024
(73) Proprietor: Tetra Laval Holdings & Finance S.A., 1009 Pully (CH)
(72) Inventor: FERRARI, Fabio, 41123 Modena (IT); ORSINI, Ivan, 41123 Modena (IT); ANDRADE, Jefferson Luis, 41123 Modena (IT)
(74) Representative: Tetra Pak Patent Attorneys

(56) References cited:
- EP-A1- 1 325 868
- WO-A1-2006/041380
- WO-A2-2012/152403

## Description

### TECHNICAL FIELD

The present invention relates to a package forming apparatus for a packaging machine for forming packages filled with a pourable product, preferentially a pourable food product.

Advantageously, the present invention also relates to a packaging machine for forming packages filled with a pourable product, preferentially a pourable food product.

### BACKGROUND ART

As is known, many liquid or pourable food products, such as fruit juice, UHT (ultra-high-temperature treated) milk, wine, tomato sauce, etc., are sold in packages made of sterilized packaging material.

A typical example is the parallelepiped-shaped package for liquid or pourable food products known as Tetra Brik Aseptic (registered trademark), which is made by sealing and folding laminated strip packaging material. The packaging material has a multilayer structure comprising a base layer, e.g. of paper, covered on both sides with layers of heat-seal plastic material, e.g. polyethylene. In the case of aseptic packages for long-storage products, such as UHT milk, the packaging material also comprises a layer of oxygen-barrier material (an oxygen-barrier layer), e.g**.** an aluminum foil, which is superimposed on a layer of heat-seal plastic material, and is in turn covered with another layer of heat-seal plastic material forming the inner face of the package eventually contacting the food product.

Packages of this sort are normally produced on fully automatic packaging machines, which advance a web of packaging material through a sterilization apparatus for sterilizing the web of packaging material at a sterilization station and to an isolation chamber (a closed and sterile environment) in which the sterilized web of packaging material is maintained and advanced. During advancement of the web of packaging material through the isolation chamber, the web of packaging material is folded and sealed longitudinally at a tube forming station to form a tube having a longitudinal seam portion, the tube being further fed along a vertical advancing direction.

For completing the forming operations, the tube is filled with a pourable product, in particular a pourable food product, and is transversally sealed and subsequently cut along equally spaced transversal cross sections within a package forming apparatus of the packaging machine during advancement along the vertical advancing direction.

Pillow packages are so obtained, each pillow package having a longitudinal sealing band, a top transversal sealing band and a bottom transversal sealing band.

A typical packaging machine comprises a conveying device for advancing the web of packaging material along a web advancement path and the tube formed from the web of packaging material along a tube advancement path, the sterilization apparatus for sterilizing the web of packaging material prior to its formation into the tube, a tube forming and sealing device at least partially arranged within the isolation chamber and being configured to form the tube from the advancing web of packaging material and to longitudinally seal the tube, a filling device for filling the tube with the pourable product and the package forming apparatus adapted to form, transversally seal and cut individual packages from the tube of packaging material.

The package forming apparatus comprises at least one operative device having at least a first operative group and a second operative group configured to at least partially form and to transversally seal and cut in cooperation the, in use, advancing tube.

Each operative device also comprises a carrier movably coupled to a support structure of the package forming apparatus, a first support portion carrying the first operative group and a second support portion carrying the second operative group. Additionally, the first support portion and the second support portion are mounted on the carrier and, accordingly, move together with the carrier.

Additionally, the first operative group and the second operative group are laterally displaced from, respectively, the first support portion and the second support portion.

Each operative device comprises at least one sealing device configured to transversally seal the tube. Each sealing device comprises a sealing element associated to the respective first operative group and a counter-sealing element associated to the second operative group.

Examples of package forming apparatuses are disclosed in patent documents EP1325868A1 WO2006/041380A1, WO2012/152403A2.

It is furthermore known that the sealing technology implemented in the package forming apparatus is based on whether or not the packaging material comprises an electrically conducting layer, in particular an aluminum layer.

More specifically, in dependence of the specific kind of packaging material, the sealing device may be of a first type or a second type. In particular, in the case that the packaging material does not comprise an electrically conducting layer, the sealing device may be of a first type operating by means of ultrasonic sealing, while in the case that the packaging material comprises an electrically conducting layer, the sealing device may be of a second type operating by means of induction heating.

Therefore, a change of the specific composition of the packaging material (e.g. from the packaging machine being fed with the packaging material comprising an electrically conducting layer to the packaging material being fed with the packaging material lacking an electrically conducting layer) would require rebuilding the packaging machine. Therefore, the known packaging machines may work with only one type of packaging material.

Thus, even though the known package forming apparatuses and/or packaging machines work satisfactorily well, a desire is felt in the sector to further improve the known package forming apparatuses and/or the known packaging machines, preferentially allowing a change of the configuration of the package forming apparatus, so that the packaging machine may work with more than one type of the packaging material.

### DISCLOSURE OF INVENTION

It is therefore an object of the present invention to provide an improved package forming apparatus, preferentially coming along with the possibility to easily modify the configuration of the package forming apparatus.

Additionally, it is an object of the present invention to provide an improved packaging machine.

According to the present invention, there is provided a package forming apparatus as claimed in claim 1.

Preferred non-limiting embodiments of the package forming apparatus are claimed in the claims being directly and indirectly dependent on claim 1.

According to the present invention, there is also provided a packaging machine according to claim 15.

### BRIEF DESCRIPTION OF THE DRAWINGS

A non-limiting embodiment of the present invention will be described by way of example with reference to the accompanying drawings, in which:
Figure 1 is a schematic view of a packaging machine having a package forming apparatus according to the present invention, with parts removed for clarity;
Figure 2 is a schematic perspective view of a detail of the package forming apparatus of Figure 1, with parts removed for clarity;
Figure 3 is a perspective view of a detail of the package forming apparatus of Figure 1 taken from a first perspective and according to a first configuration, with parts removed for clarity;
Figure 4 is a perspective view of the detail of the package forming apparatus of Figure 3 taken from a second perspective, with parts removed for clarity;
Figure 5 is an enlarged perspective view of a portion of the detail of Figures 3 and 4, with parts removed for clarity;
Figure 6 is a perspective view of portions of the detail of Figures 3 and 4, with parts removed for clarity;
Figure 7 is an enlarged perspective view of a further portion of the detail of Figures 3 and **4****,** with parts removed for clarity;
Figure 8 is a perspective view of a detail of the package forming apparatus of Figure 1 from a first perspective and according to a second configuration, with parts removed for clarity; and
Figure 9 is a perspective view of the detail of the package forming apparatus of Figure 8 from a second perspective, with parts removed for clarity.

### BEST MODES FOR CARRYING OUT THE INVENTION

Number 1 indicates as a whole a packaging machine for producing sealed packages 2 of a pourable product, in particular a pourable food product, such as milk, milk drinks, yoghurt, yoghurt drinks, fruit juice, wine, tomato sauce, emulsions, beverages containing pulp, salt, sugar, etc.

In more detail, packaging machine 1 may be configured to produce packages 2 from a multilayer packaging material. Preferentially, a multilayer packaging material having heat seal properties (i.e. portions of the multilayer packaging material can be sealed to one another).

In further detail, the multilayer packaging material may comprise at least one layer of fibrous material, such as e.g. paper or cardboard, and at least two layers of heat-seal plastic material, e.g. polyethylene, interposing the layer of fibrous material in between one another. Preferentially, one of these two layers of heat-seal plastic material may define the inner face of packages 2 contacting the pourable product.

Moreover, the multilayer packaging material may also comprise a layer of gas- and light-barrier material, e.g. an aluminum layer or ethylene vinyl alcohol (EVOH) film, preferentially being arranged between one of the layers of the heat-seal plastic material and the layer of fibrous material.

According to some possible embodiments, the multilayer packaging material may comprise an electrically conductive layer, such as the aluminum layer. As will be explained in more detail further below, the electrically conductive layer may be heated by means of induction heating.

Preferentially, the packaging material may also comprise a further layer of heat-seal plastic material being interposed between the layer of gas- and light-barrier material and the layer of fibrous material.

In further detail, the multilayer packaging material may be provided in the form of a web 3.

Preferentially, web 3 comprises successively arranged patterns, each pattern defining a final graphical pattern of the respective package 2. In other words, packaging machine 1 operates, in use, such to guarantee that packages 2 comprise the respective pattern.

Furthermore, packaging machine 1 may be configured to produce packages 2 by forming a tube 4 from web 3, longitudinally sealing tube 4, filling tube 4 with the pourable product and to transversally seal, and preferentially transversally cut tube 4.

According to some possible non-limiting embodiments, each package 2 may extend along a longitudinal axis A.

According to some possible embodiments, each package 2 may comprise at least a first transversal sealing band 5 arranged at a first end of package 2, and preferentially also a second transversal sealing band arranged at a second end of package 2 opposite to the first end.

Preferentially, each first transversal sealing band 5 may be substantially spaced apart from the respective second transversal sealing band along the respective longitudinal axis A.

Preferentially, each first transversal sealing band 5 may define a transversal top sealing band and each second transversal sealing band may define a transversal bottom sealing band.

Moreover, each package 2 may also comprise a longitudinal seam portion 6. Preferentially, each first transversal sealing band 5 and/or each second transversal sealing band may be transversal, preferentially perpendicular, to the respective longitudinal seam portion 6.

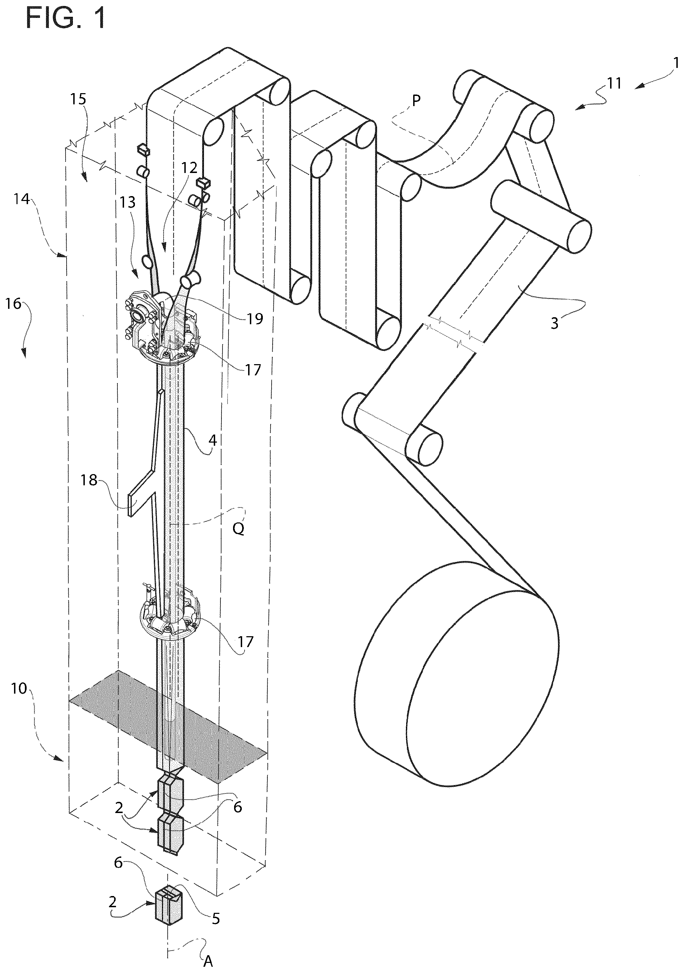

With particular reference to Figure 1, packaging machine 1 may comprise a package forming apparatus 10 configured to transversally seal, and preferentially to transversally cut tube 4 for obtaining semi-finalized packs, preferentially package pouches. Preferentially, package forming apparatus 10 may also be configured to form tube 4.

Preferentially, package forming apparatus 10 may comprise an advancement space within which, in use, tube 4 advances.

Additionally packaging machine 1 may comprise a final folding apparatus configured to receive the semi-finalized packs from package forming apparatus 10 and to form packages 2 from the semi-finalized packs.

Moreover, packaging machine 1 may also comprise:
- a conveying device 11 configured to advance web 3 along a web advancement path P, preferentially to a tube forming station, at which, in use, web 3 is formed into tube 4, and configured to advance tube 4 along a tube advancement path Q;
- a tube forming and sealing device 12 configured to form tube 4 from the, in use, advancing web 3 and to longitudinally seal tube 4; and
- a filling device 13 for filling tube 4 with the pourable product.

In further detail, packaging machine 1 may also comprise an isolation chamber 14, preferentially delimiting an inner environment 15 from an outer environment 16. Preferentially, inner environment 15 may be a sterile environment, preferably containing a controlled atmosphere.

Preferentially, tube forming and sealing device 12 may be at least partially arranged within isolation chamber 14, in particular inner environment 15, and being configured to fold and longitudinally seal tube 4 within isolation chamber 14, in particular inner environment 15.

Moreover, packaging machine 1 may also comprise a sterilization unit configured to sterilize the, in use, advancing web 3, preferentially the sterilization unit being arranged upstream of tube forming and sealing device 12 along web advancement path P.

In more detail, conveying device 11 may be configured to advance tube 4 and any intermediates of tube 4 along tube advancement path Q, preferentially from tube forming and sealing device 12 to and/or at least partially within package forming apparatus 10. Preferentially, with the wording intermediates of tube 4 any configuration of web 3 is meant prior to obtaining the tube structure and after folding of web 3 by tube forming and sealing device 12 has started. In other words, the intermediates of tube 4 are a result of the gradual folding of web 3 so as to obtain tube 4, preferentially by overlapping the (longitudinal) edges of web 3 with one another.

According to some possible non-limiting embodiments, tube forming and sealing device 12 may be arranged such that tube 4 may have a vertical orientation.

More specifically, tube forming and sealing device 12 may comprise at least two forming ring assemblies 17, preferentially arranged within isolation chamber 14, even more preferentially arranged within inner environment 15, being configured to gradually fold in cooperation with one another web 3 into tube 4, preferentially by overlapping the edges of web 3 with one another. Thereby, in use, seam portion 6 of tube 4 may be formed.

Additionally, tube forming and sealing device 12 may comprise a sealing head 18, preferentially arranged within isolation chamber 14, even more preferentially within inner environment 15, and configured to longitudinally seal tube 4, preferentially along longitudinal seam portion 6.

Moreover, tube forming and sealing device 12 may also comprise a pressure assembly configured to exert a mechanical force on longitudinal seam portion to ensure sealing of tube 4 along longitudinal seam portion 6.

Preferentially, filling device 13 may comprise a filling pipe 19 being configured to direct, in use, the pourable product into tube 4. Preferentially, filling pipe 19 may, in use, be at least partially placed within tube 4 for feeding, in use, the pourable product into tube 4.

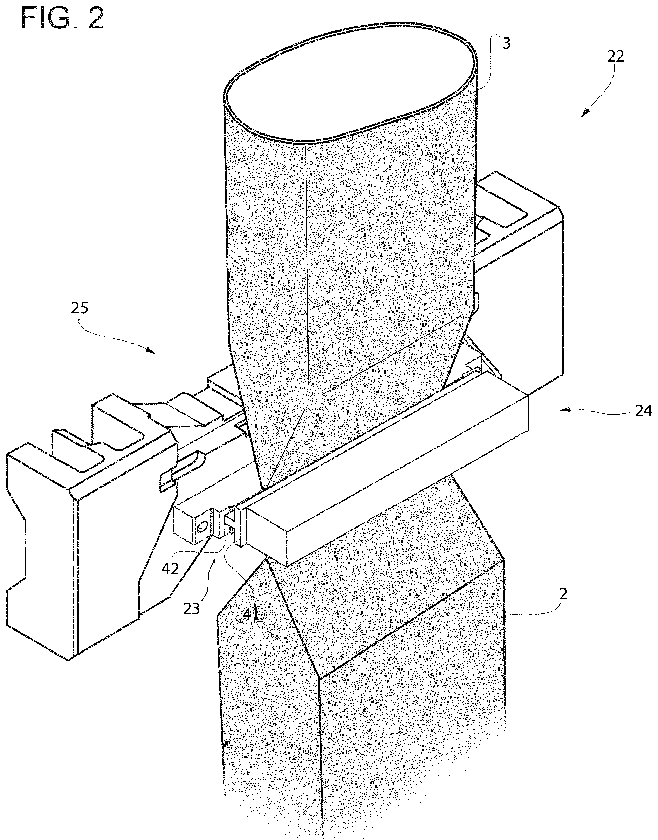

With particular reference to Figures 1 and 2, package forming apparatus 10 may comprise one or more, preferentially a plurality of, operative devices 22 (only partially shown to the extent necessary for the comprehension of the present invention), each one configured to at least transversally seal, preferentially to also transversally cut tube 4 and/or to at least partially form (shape) tube 4.

Preferentially, package forming apparatus 10 may be configured to control each operative device 22 such to at least transversally seal tube 4, preferentially along respective transversal cross sections.

More preferentially, package forming apparatus 10 may be configured to control each operative device 22 such to also at least partially form tube 4 and/or transversally cut tube **4.**

According to some possible non-limiting embodiments, package forming apparatus 10 may comprise at least two operative devices 22, preferentially exactly two.

In more detail, each operative device 22 may comprise a transversal sealing device 23 configured to transversally seal tube 4, preferentially along respective transversal cross-sections of tube **4.**

Each sealing device 23 can be of a first type and a second type different from the first type.

Moreover, package forming apparatus 10 is configured to be selectively (i.e. alternatively) equipped with transversal sealing devices 23 of the first type and the second type. It must be stressed that package forming apparatus 10 can operate both with sealing devices 23 of the first type and sealing devices 23 of the second type.

In further detail, if package forming apparatus 10 is equipped with sealing devices 23 of the first type, each operative device 22 comprises one respective sealing device 23 of the first type and if package forming apparatus 10 is equipped with sealing devices 23 of the second type, each operative device 22 comprises one respective sealing device 23 of the second type.

It should be stressed that package forming apparatus 10 is either equipped with only sealing devices 23 of the first type or with only sealing devices 23 of the second type, i.e. package forming apparatus 10 cannot be equipped contemporarily with at least one sealing device 23 of the first type and at least one sealing device 23 of the second type.

According to some preferred non-limiting embodiments, each sealing device 23 is either of the ultrasonic type (first type) or the induction heating type (second type) meaning that the transversal sealing is obtained by either heating the packaging material by means of ultrasound or by the induction of eddy currents within the electrically conductive layer, preferentially a metal layer, even more preferentially the aluminum layer, of the packaging material.

In other words, each sealing device 23 of the first type is configured to transversally seal tube 4 by ultrasonic sealing and each sealing device 23 of the second type is configured to transversally seal tube 4 by induction heating.

It should be stressed that the above-mentioned sealing technologies (i.e. ultrasonic sealing and induction heating) are two examples, which do not have any limiting scope. Solutions based on other sealing technologies are explicitly considered in the present case.

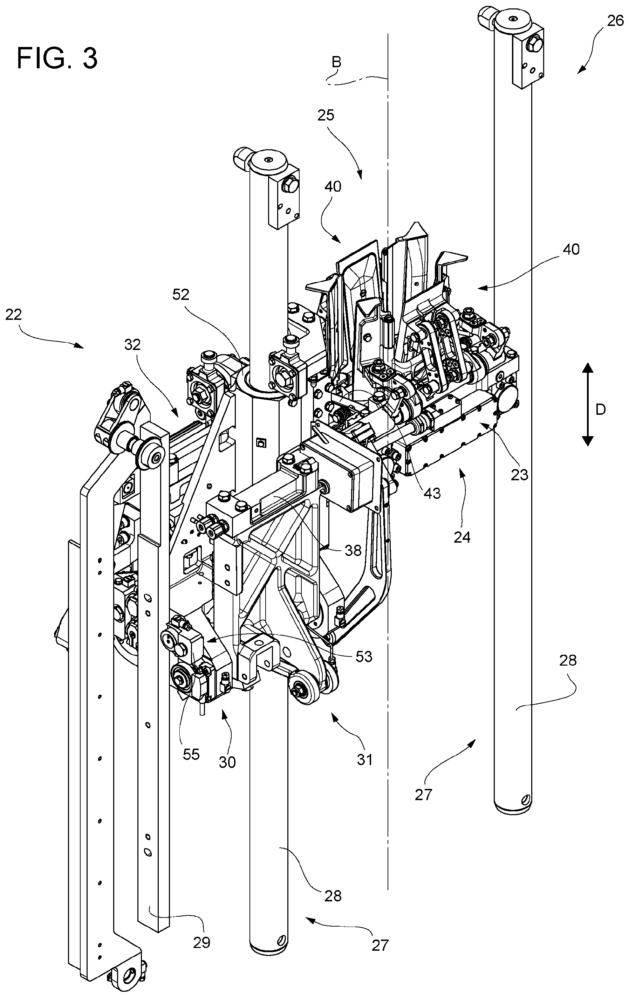

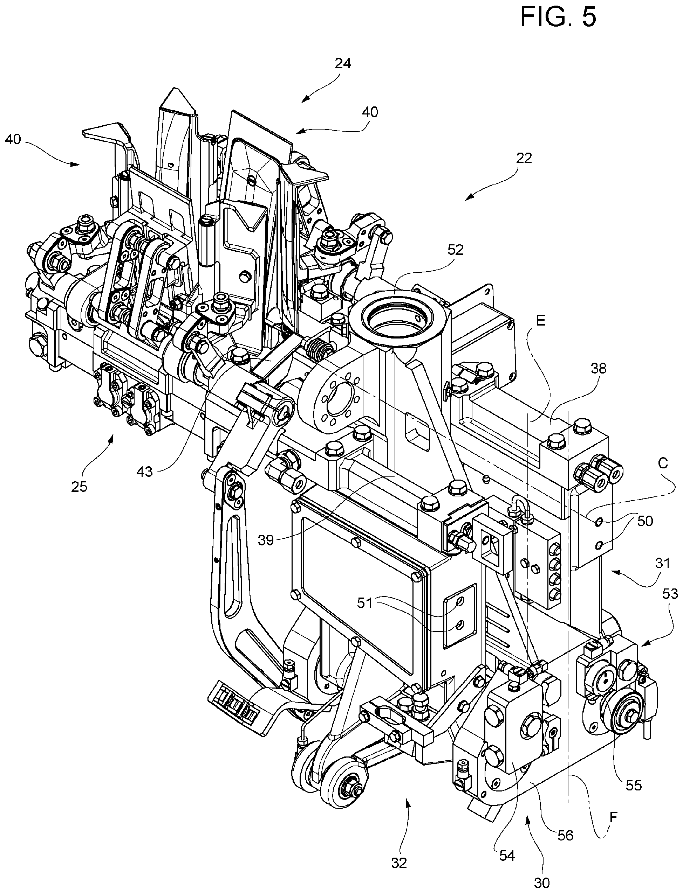

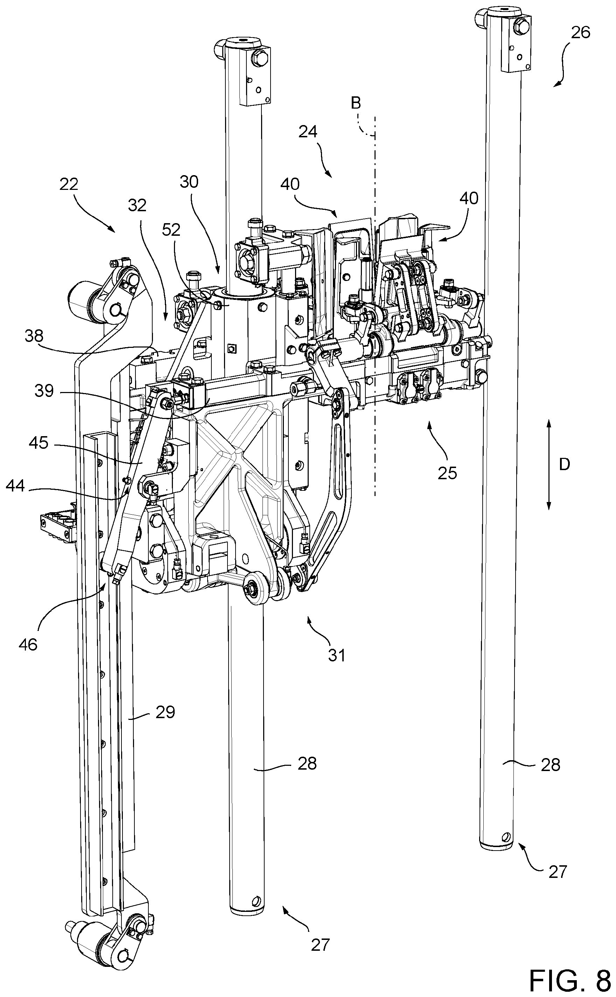

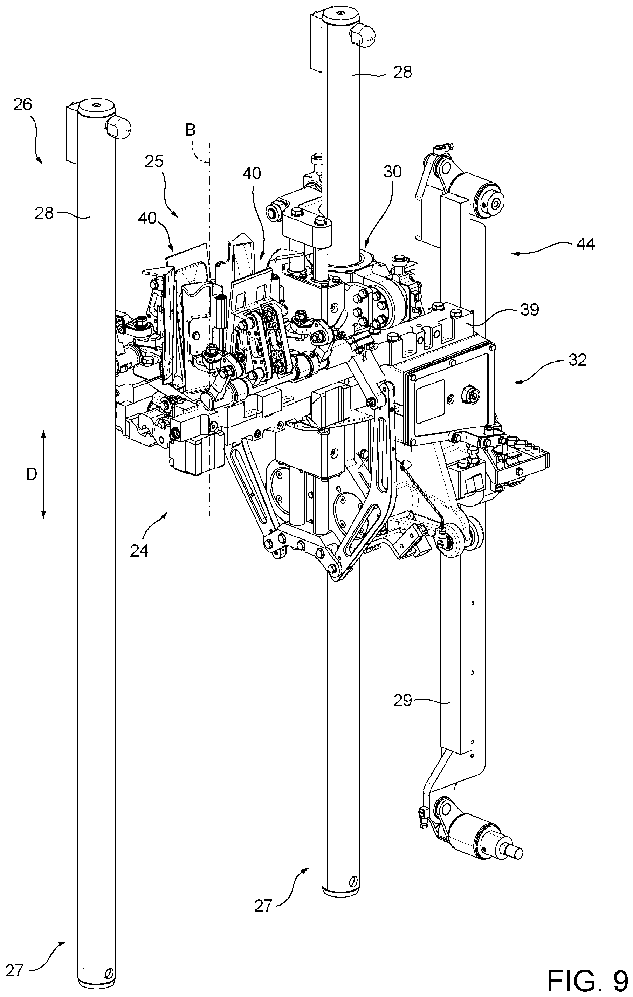

Figures 3 to 5 show packaging machine 1 being equipped with sealing devices 23 of the first type, while figures 8 and 9 show packaging machine 1 being equipped with sealing devices 23 of the second type.

With particular reference to Figures 3 to 5, 8 and 9, each sealing device 23 comprises one respective sealing element 41 and one respective counter-sealing element 42 configured to transversally seal tube 4 in cooperation with one another.

Preferentially, each sealing element 41 and the respective counter-sealing element 42 may be configured to compress and to transversally seal in cooperation tube 4.

In further detail, each sealing element 41 may comprise a source configured to generate the energy needed to obtain the sealing effect, in particular obtaining a heating of the packaging material. Preferentially, sealing element 41 defines whether sealing device 23 is of the first type or of the second type. In other words, if sealing device 23 is of the first type, sealing element 41 may be a sonotrode having one or more ultrasound-emitters, while if sealing device 23 is of the second type sealing element 41 may have an electromagnetic induction source. Each counter-sealing element 42 may be a passive element (i.e. not having an active source). For example, counter-sealing element 42 may be a metal anvil or a deformable pad.

In further detail and with particular reference to Figure 2, each operative device 22 may comprise at least a first operative group 24 and a second operative group 25 configured to cooperate with one another for at least transversally sealing, preferentially also transversally cutting and/or at least partially forming, tube 4.

In particular, each first operative group 24 and the respective second operative group 25 may be movable with respect to one another, preferentially so as to move each first operative group 24 and the respective second operative group 25 towards and away from one another.

In more detail, each operative device 22 may be controllable between an active configuration, in which the respective first operative group 24 and the respective second operative group 25 are approached to one another for at least transversally sealing, preferentially also transversally cutting and/or at least partially forming, tube 4 and a rest configuration, in which the respective first operative group 24 and the respective second operative group 25 are withdrawn from one another.

Moreover, the respective first operative group 24 comprises the respective sealing element 41 and the respective second operative group 25 comprises the respective counter-sealing element 42.

Preferentially, each sealing element 41 and the respective counter-sealing element 42 may be moved towards and withdrawn from one another with the respective first operative group 24 and the respective second operative group 25 being moved towards and withdrawn from one another, respectively.

Moreover, package forming apparatus 10 may also comprise a conveying unit configured to advance each first operative group 24 and each second operative group 25 along a respective first advancement path and a respective second advancement path, respectively.

In more detail, each first advancement path and each second advancement path may comprise an operative portion along which each first operative group 24 and the respective second operative group 25 advance, in use, in a direction of advancement of tube **4,** and a return portion along which each first operative group 26 and each second operative group 27 advance, in use, in a direction opposite to the direction of advancement of tube 4 so as to bring each first operative group 24 and the respective second operative group 25 back to the respective operative portion.

Moreover, each operative device 22 may be controlled from the respective rest configuration to the respective active configuration during advancement of the respective first operative group 24 and the respective second operative group 25 along the respective operative portion, preferentially for transversally sealing and/or transversally cutting and/or for at least partially forming tube **4.**

In even further detail, in use, after completion of the transversal sealing, and preferentially the transversal cutting and/or the partial forming, of tube 4, each operative device 22 may be controlled back to the respective rest configuration.

In other words, during advancement of each first operative group 24 and the respective second operative group 25 along the respective operative portions, each first operative group 24 and the respective second operative group 25 may be moved towards one another. After termination of the transversal sealing and/or the transversal cutting and/or the partial forming, of tube 4, each first operative group 24 and the respective second operative group 25 are withdrawn from one another.

With particular reference to Figures 3, 4, 8 and 9, package forming apparatus 10 may comprise a support structure 26 movably carrying each operative device 22.

Support structure 26 may comprise one or more support assemblies 27, each one movably carrying one respective operative device 22.

According to some non-limiting embodiments, package forming apparatus 10 may comprise two, preferentially exactly two, operative devices 22, and support structure 26 may comprise two, preferentially exactly two, support assemblies 27. Preferentially, support assemblies 27 may be spaced apparat from one another. Even more preferentially, support assemblies 27 may be arranged such that, in use, the advancing tube 4 may be interposed between support assemblies 27. In other words, support assemblies 27 may define and/or delimit the advancement space through which, in use, tube 4 advances.

Advantageously, each support assembly 27 may comprise a respective first guide 28, preferentially having a linear shape, and a respective second guide 29, preferentially having a linear shape, spaced apart from the respective first guide 29.

Preferentially, support structure 26, more preferentially each support assembly 27, may extend along a respective longitudinal axis B.

More preferentially, each first guide 28 and each second guide 29 may extend along a linear axis defining and/or being parallel to longitudinal axis B.

Preferentially, each first guide 28 and each second guide 29 may have a vertical orientation.

As will be explained in more detail further below, each first guide 28 and the respective second guide 29 may at least partially define the respective first advancement path of the respective first operative group 24 and the respective second advancement path of the respective second operative group 25.

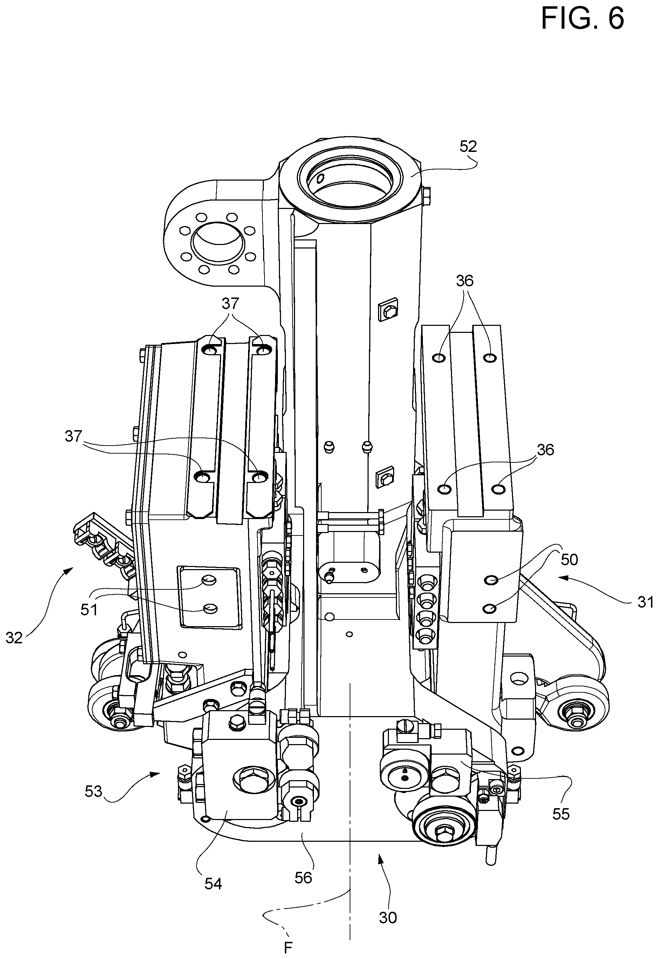

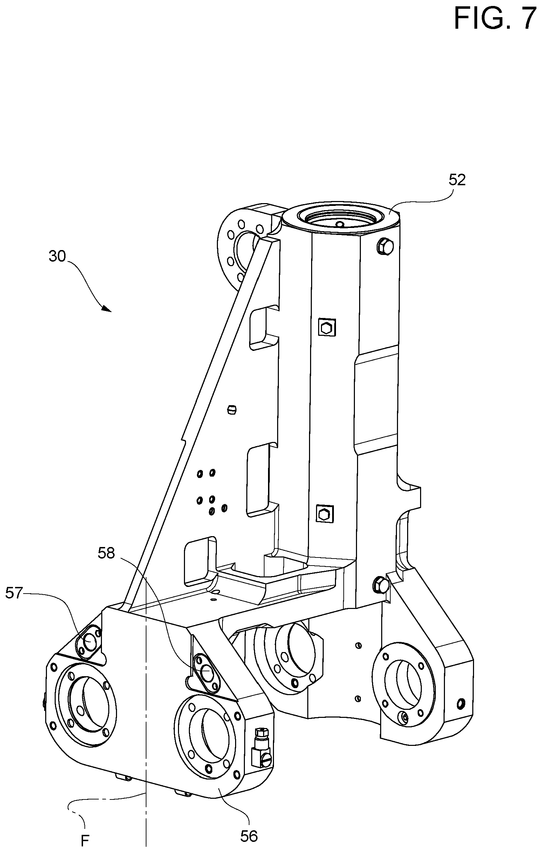

With particular reference to Figures 3 to 9, each operative device 22 further comprises a carrier 30 movably coupled to support structure 26, preferentially to one respective support assembly 27. Preferentially, each carrier 30 may be movably coupled to the respective first guide 28 and the respective second guide 29.

Preferentially, each carrier 30 may be movable along a linear direction D (in particular, both forward and backward).

Preferentially, each first operative group 24 and the respective second operative group 25 may be coupled to the respective carrier 30.

Additionally, the conveying unit may be configured to move each carrier 30 along, preferentially back and forth, the respective first guide 28 and the respective second guide 29 so as to move the respective first operative group 24 and the respective second operative group 25 along respectively the first advancement path and the second advancement path.

Moreover, each operative device 22 comprises a first support portion 31 and a second support portion 32 mounted to the respective carrier 30 and being movable with respect to one another.

Preferentially, each first support portion 31 and each second support portion 32 may be movable, more preferentially angularly movable about a respective rotation axis, between a respective first position in which each first support portion 31 and the respective second support portion 32 are withdrawn from one another and a respective second position in which each first support portion 31 and the respective second support portion 32 are approached to one another.

Each first operative group 24 is connected to one of the respective first support portion 31 and the respective second support portion 32 and the respective second operative group 25 is connected to the other one of the first support portion 31 and the second support portion 32.

In particular, whether the first operative group 24 is connected to the respective first support portion 31 or to the respective second support portion 32 depends on whether packaging machine 1 shall operate with sealing devices 23 of the first type or with sealing devices 23 of the second type. In other words, whether the first operative group 24 is connected to the respective first support portion 31 or to the respective second support portion 32 is dependent on the specific packaging material to be used.

In more detail, if the used sealing devices 23 are of the first type first operative groups 24 are, in particular removably, fixed to the respective first support portions 31 and the respective second operative groups 25 are, in particular removably, fixed to the respective second support portions 32.

Moreover, if the used sealing devices 23 are of the second type first operative groups 24 are, in particular removably, fixed to the respective second support portions 32 and the respective second operative groups 25 are, in particular removably, fixed to the respective first support portions 31.

According to some preferred non-limiting embodiments, with first support portion 31 and the respective second support portion 32 being in, respectively, the respective first position and the respective second position, the respective first operative group 24 and the respective second operative group 25 may be in, respectively, the rest configuration and the active configuration.

Advantageously, each first support portion 31 comprises a plurality of first fixing points 36, preferentially in the form of respective first fixing holes and each second support portion 32 comprises a plurality of second fixing points 37, preferentially in the form of respective second fixing holes.

If sealing device 23 is of the first type (see e.g. Figures 3 to 5) the respective first operative group 24 is, in particular removably, fixed to the respective first support portion 31 at the respective first fixing points 36, preferentially by respective first fixing elements, more preferentially respective screws or bolts, and the respective second operative group 25 is, in particular removably, fixed to the respective second support portion 32 at the respective second fixing points 37, preferentially by respective second fixing elements, more preferentially respective screws or bolts.

If the sealing device 23 is of the second type (see e.g. Figures 8 and 9) the respective first operative group 24 is, in particular removably, fixed to the respective second support portion 32, preferentially by respective second fixing elements, more preferentially respective screws or bolts, at the respective second fixing points 37 and the respective second operative group 25 is, in particular removably, fixed to the respective first support portion 31 at the respective first fixing points 36, preferentially by respective first fixing elements, more preferentially respective screws or bolts.

Thus, if packaging machine 1 shall operate with the packaging material being void of an electrically conductive layer, preferentially a metal layer, more preferentially, an aluminum layer, first operative devices 24 are mounted to the respective first support portions 31 at the respective first fixing points 36 and second operative devices 24 are mounted to the respective second support portions 32 at the respective second fixing points 37 as the sealing devices 23 are of the first type and if packaging machine 1 shall operate with the packaging material comprising an electrically conductive layer, preferentially a metal layer, more preferentially an aluminum layer, first operative devices 24 are mounted to the respective second support portions 32 at the respective second fixing points 37 and second operative devices 24 are mounted to the respective first support portions 31 at the respective first fixing points 37 as the sealing devices 23 are of the second type.

According to some preferred non-limiting embodiments, each first operative group 24 may comprise a first connecting bar 38 and each second operative group 25 may comprise a second connecting bar 39.

In further detail, if sealing devices 23 are of the first type, first connecting bars 38 are mounted to the respective first support portions 31 at the respective first fixing positions 36, preferentially by respective first fixing elements, and second connecting bars 39 are mounted to the respective second support portions 32 at the respective second fixing positions 37, preferentially by respective second fixing elements, and if sealing devices 23 are of the second type, first connecting bars 38 are mounted to the respective second support portions 32 at the respective second fixing positions 37, preferentially by respective second fixing elements, and second connecting bars 39 are mounted to the respective first support portions 31 at the respective first fixing positions 36, preferentially by respective first fixing elements.

Thus, in case that packaging machine 1 operates with a packaging material being void of an electrically conductive layer, preferentially a metal layer, more preferentially, an aluminum layer and one wants to change and to operate the packaging machine 1 with a packaging material comprising an electrically conductive layer, preferentially a metal layer, more preferentially an aluminum layer , the respective first connecting bars 37 and the respective second connecting bars 38 are detached from, respectively, the respective first support portions 31 and the respective second support portions 32 and the respective first operative groups 24 and the respective second operative groups 25 can be removed. Afterwards, one installs the new first operative groups 24 (having the respective sealing element 41 belonging to the sealing device 23 of the second type) and the new second operative groups 25 (having the respective counter-sealing element 42 belonging to the sealing device 23 of the second type) by mounting the respective first connecting bars 37 and the respective second connecting bars 38 to, respectively, the respective second support portions 32 and the respective first support portions 31.

On the other side, in case that packaging machine 1 operates with a packaging material comprising a metal layer (preferentially an aluminum foil) and one wants to change and to operate the packaging machine 1 with a packaging material being void of a metal layer (preferentially an aluminum foil), the respective first connecting bars 37 and the respective second connecting bars 38 are detached from, respectively, the respective second support portions 32 and the respective first support portions 31 and the respective first operative groups 24 and the respective second operative groups 25 can be removed. Afterwards, one installs the new first operative groups 24 (having the respective sealing element 41 belonging to the sealing device 23 of the first type) and the new second operative groups 25 (having the respective counter sealing element 42 belonging to the sealing device 23 of the first type) by mounting the respective first connecting bars 37 and the respective second connecting bars 38 to, respectively, the respective first support portions 31 and the respective second support portions 32.

It should be noted that each first connecting bar 37 and each second connecting bar 38 when being fixed to the respective first support portion 31 or the respective second support portion 32 laterally protrudes from the respective first support portion 31 or the respective second support portion 32.

In further detail, each first fixing element may extend through the respective first connecting bar 38 or the respective second connecting bar 39 and into one respective first fixing point 36 and each second fixing element may extend through the respective second connecting bar 39 or the respective first connecting bar 38 and into one respective second fixing point 37.

According to some preferred non-limiting embodiments, each first connecting bar 38 may comprise a first engagement surface and each second connecting bar 39 may comprise a second engagement surface.

Additionally, each first support portion 31 may comprise a first abutment surface and each second support portion 32 may comprise a second abutment surface.

If sealing devices 23 are of the first type, the first engagement surfaces engage the respective first abutment surfaces and the second engagement surfaces engage the respective second abutment surface and if sealing devices 23 are of the second type, the first engagement surfaces engage the respective second abutment surfaces and the second engagement surfaces engage the respective first abutment surfaces.

Preferentially, each first engagement surface, each second engagement surface, each first abutment surface and each second abutment surface may be planar and/or may be substantially perpendicular to longitudinal axis B, when first portion 31 and second portion 32 are in the second position and/or may be substantially perpendicular to the respective first guide 28 and the respective second guide 29 when first portion 31 and second portion 32 are in the second position.

According to some preferred non-limiting embodiments, first fixing points 36 may be different from the respective second fixing points 37 and/or a relative arrangement of the respective first fixing points 36 of each plurality of first fixing points 36 with respect to one another may be different from a relative arrangement of the respective second fixing points 37 of each plurality of second fixing points 37 with respect to one another. In this manner, one guarantees that first operative devices 24 and second operative devices 25 are correctly applied to first support portions 31 and second portions 32 depending on whether sealing devices 23 are of the first type or of the second type. In fact, a technical operator, when setting up packaging machine 1, cannot accidentally mount first connecting bar 37 on second support portion 32 and second connecting bar 38 on first support portion 31 if sealing devices 23 are of the first type and, similarly, cannot accidentally mount first connecting bar 37 on first support portion 31 and second connecting bar 38 on second support portion 32 if the sealing devices 23 are of the second type.

According to some preferred non-limiting embodiments, each first connecting bar 38 may comprise a plurality of first through-holes and each second connecting bar 39 may comprise a plurality of second through-holes.

If sealing devices 23 are of the first type, each first through-hole is aligned with respect to one respective first fixing point 36 and each second through-hole is aligned with respect to one respective second fixing point 37 and if sealing devices 23 are of the second type, each first through-hole is aligned with respect to one respective second fixing point 37 and each second through-hole is aligned with respect to one respective first fixing point 36.

Furthermore, if sealing devices 23 are of the first type, the respective first through-holes are arranged differently than if sealing devices 23 are of the second type. In this way, one ensures that the first through-holes are aligned with the respective first fixing points 36 if sealing devices 23 are of the first type and with the respective second fixing points 37 if sealing devices 23 are of the second type.

Additionally, if sealing devices 23 are of the first type, the respective second through-holes are arranged differently than if sealing devices 23 are of the second type. In this way, one ensures that the second through-holes are aligned with the respective second fixing points 37 if sealing devices 23 are of the first type and with the respective first fixing points 36 if sealing devices 23 are of the second type.

With particular reference to Figures 2 to 6, each first operative group 24 and each second operative group 25 may comprise a respective half-shell 40, each half-shell 40 being configured to at least partially form tube 4. In particular, in use, each half-shell 40 of each first operative group 24 may be configured to at least partially form tube 4 in cooperation with the respective half-shell 40 of the respective second operative group 25.

Preferentially, the two half-shells 40 of each operative device 23 may be withdrawn from and approached to one another with the respective first operative group 24 and the respective second operative group 25 being controlled in the respective rest configuration and the respective active configuration, respectively, and/or with the respective first support portion 31 and the respective second support portion 32 being in the respective first position and the respective second position, respectively.

Additionally, each operative device 22 may comprise at least one cutting assembly configured to transversally cut tube **4.** Preferentially, each cutting assembly may be configured to transversally cut tube 4 after sealing of tube 4 by means of the respective sealing element 41 and the respective counter-sealing element 42.

Each cutting assembly may comprise a cutting blade.

Preferentially, each second operative group 25 may comprise the respective cutting blade of the respective cutting assembly.

In particular, each half-shall 40 may be laterally displaced from the respective first support portion 31 or the respective second support portion 32.

Moreover, each sealing element 41 may be laterally displaced from the respective first support portion 31 and the respective second support portion 32 if the respective first operative group 24 is connected to, respectively, the respective first support portion 31 and the respective second support portion 32.

Additionally, each counter-sealing element 42 may be laterally displaced from the respective second support portion 32 and the respective first support portion 31 if the second operative group 25 is connected to, respectively, the respective second support portion 32 and the respective first support portion 31.

With particular reference to Figures 3 to 6, each operative device 22, preferentially the respective second operative group 25, may comprise a pair of movable interaction tabs 43 configured to interact, in use, with tube 4 from opposite sides thereof.

Preferentially, interaction tabs 43 of each pair of interaction tabs 43 may be movable with respect to one another, preferentially so as to selectively move interaction tabs 43 towards and away from one another.

Preferentially, each pair of interaction tabs 43 may be controllable between a first limit position in which the respective interaction tabs 43 are configured to be, in use, detached from tube 4 and a second limit position in which the respective interaction tabs 43 are configured to be, in use, in contact with tube **4.**

Preferentially, the respective interaction tabs 43 of each pair of interaction tabs 43 may be closer to one another when being in the second limit position than when being in the first limit position. In other words, interaction tabs 43 are withdrawn from one another when being in the first limit position and are approached to one another when being in the second limit position.

In more detail, each pair of interaction tabs 43 may be configured to interact, preferentially when being in the second limit position, with the in use advancing tube 4 from opposite sides thereof for exerting a pulling force on tube 4.

In even more detail, each pair of interaction tabs 43 may be configured to control and/or modify advancement of tube 4 such that tube 4 is "in register" with the respective operative device 22, meaning that each pair of interaction tabs 43 guarantees that the respective operative device 22, preferentially the respective first operative group 24 and the respective second operative group 25, transversally seal and/or cut and/or at least partially form tube 4 at an intended region of the respective pattern, in particular such that the respective finalized package 2 has the respective desired pattern.

Furthermore, each pair of interaction tabs 43 may be configured to exert a controlled pulling force on tube 4 so as to "pull" tube 4 in a downstream direction along tube advancement path Q.

In further detail, the controlled pulling force may be dependent on the relative distance between the respective interaction tabs 43 of each pair, preferentially on the degree of controlling each pair of interaction tabs 43 between the respective first limit position and the respective second limit position. In other words, the controlled pulling force may depend on the actual interacting position in which the pair of interaction tabs 43 is stopped when interacting with the tube 4, such actual interacting position being interposed between the respective first limit position and the respective second limit position, or corresponding with the respective second limit position. In even other words, the controlled pulling force is a function of the relative distance of the respective interaction tabs 43 from one another.

Alternatively or additionally, each pair of interaction tabs 43 may also be configured to fold tube 4 so as to define flaps of the respective semi-finalized packs.

According to some preferred non-limiting embodiments, each operative device 22, preferentially the respective second operative group 25, may also comprise an actuating device 44 coupled to the respective pair of interaction tabs 43 and being configured to move the interaction tabs 43 with respect to one another.

More specifically, each actuating device 44 may comprise a control bar 45 coupled to the pair of interaction tabs 43 for actuating movement of the pair of interaction tabs 43.

Even more specifically, each actuating device 44 may also comprise an inner bar arranged within the respective second connecting bar 39.

Each inner bar may be operatively coupled to the respective pair of interaction tabs 43 and the respective control bar 45.

According to some preferred non-limiting embodiments, package forming apparatus 10 may also comprise one or more cam mechanisms 46, preferentially at least two cam mechanisms 46, each cam mechanism 46 being coupled to at least one respective control bar 45 and being configured to move the respective control bar 45 so as to induce movement of the respective interaction tabs 43.

According to some preferred non-limiting embodiments, each first support portion 31 may comprise a plurality of first attachment points 50, e.g. in the form of first attachment holes, and the second support portion 32 may comprise a plurality of second attachment points 51, e.g. in the form of second attachment holes.

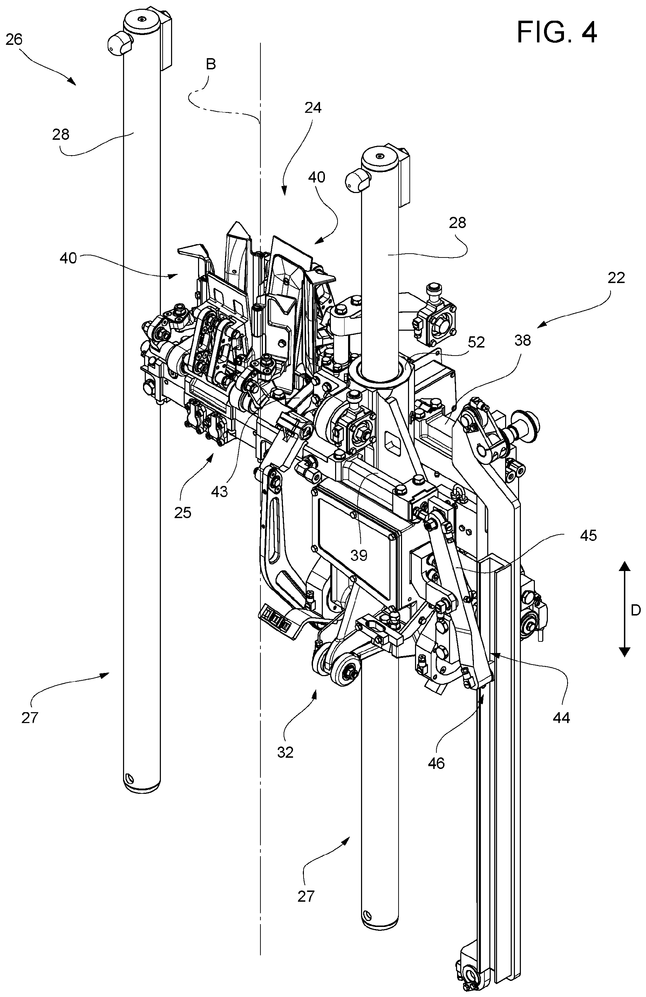

Preferentially, each control bar 45 may be mounted to the respective first support portion 31 at the respective first attachment points 50, e.g. by means of respective first attachment elements such as screws or bolts, if sealing devices 23 are of the second type (see Figures 8 and 9) and to the respective second support portion 32 (see Figures 3 and 4) at the respective second attachment points 51, e.g. by means of respective second attachment elements such as screws or bolts, if sealing devices 23 are of the first type.

Advantageously, each plurality of first attachment points 50 and the respective plurality of second attachment points 51 may be mirror symmetric with respect to a mirror axis E, preferentially being parallel to longitudinal axis B and/or the respective first guide 28 and the respective second guide 29.

With particular reference to Figures 3 to 9, each carrier 30 may comprise a first coupling structure 52 and a second coupling structure 53 coupling carrier 30 to the respective first guide 28 and the respective second guide 29, respectively.

Preferentially, each second coupling structure 53 may comprise a first portion 54 and a second portion 55 contacting the respective second guide 29 from opposites thereof.

According to some preferred non-limiting embodiments, each carrier 30 may comprise a support plate 56 having a first connecting area 57 and a second connecting area 58.

Advantageously, each first connecting area 57 and the respective second connecting area 58 may be mirror symmetric with respect to a respective symmetry axis F, preferentially being parallel to longitudinal axis B and/or the respective first guide 28 and the respective second guide 29.

Moreover, if sealing devices 23 are of the first type each first portion 54 may be connected to the respective first connecting area 57 and the respective second portion 55 may be connected to the respective second connecting area 57 and if sealing devices 23 are of the second type each second portion 55 may be connected to the respective first connecting area 57 and the respective first portion 54 may be connected to the respective second connecting area 58.

In use, packaging machine 1 produces packages 2 filled with the pourable product.

In more detail, conveying device 11 advances web 3 along web advancement path P. Tube forming and sealing device 12 forms tube 4 from the advancing web 3 and longitudinally seals tube 4. Additionally, filling device 13 fills tube 4 with the pourable product and package forming apparatus 10 forms, transversally seals and transversally cuts tube 4 so as to obtain packages 2.

In further detail, during operation of package forming apparatus 10, operative devices 22 transversally seal, and preferentially cut tube 4. Preferentially, operative devices 22 also form packages 2 from tube 4.

During operation of each operative device 22, the respective first operative group 24 and the respective second operative group 25 are cyclically moved towards and withdrawn from one another.

The advantages of package forming apparatus 10 and/or packaging machine 1 according to the present invention will be clear from the foregoing description.

In particular, packaging machine can work both with packaging material with and without a layer of electrically conductive material, preferentially a metal layer, more preferentially an aluminum layer, increasing thereby the flexibility and versality of packaging machine 1.

A further advantage resides in having first attachment points 50 and second attachment points 51 being mirror symmetric as e.g. a modification of the positions of sealing elements 41 and the counter-sealing elements 42 also comes along with a change of the positions of interaction tabs 43.

An even other advantage resides in having each first connecting area 57 and the respective second connecting area 58 being mirror symmetric with respect to one another as this allows to easily change the position of the respective first portion 54 and the respective second portion 55 on the respective support plate 56 as it may e.g. become necessary when modifying the positions of sealing elements 41 and the counter-sealing elements 42.

Clearly, changes may be made to package forming apparatus 10 and/or packaging machine 1 as described herein without, however, departing from the scope of protection as defined in the accompanying claims.

## Claims

1. Package forming apparatus (10) for a packaging machine (1), the package forming apparatus (10) being configured to at least transversally seal a tube (4) for obtaining packages (2) from the tube (4);
wherein the package forming apparatus (10) is configured to be selectively equipped with one or more transversal sealing devices (23) of a first type;
wherein the package forming apparatus (10) comprises:
- a support structure (26); and
- at least one operative device (22) movably coupled to the support structure (26) and being configured to at least transversally seal the tube (4);
wherein the operative device (22) comprises at least:
- a carrier (30) movably coupled to the support structure (26);
- a first support portion (31) and a second support portion (32) mounted to the carrier (30) and being movable with respect to one another;
- a first operative group (24) connectable to one of the first support portion (31) and the second support portion (33); and
- a second operative group (25) connectable to the other one of the first support portion (31) and the second support portion (33);
wherein the first operative group (24) comprises a sealing element (41) of the respective sealing device (23) and the second operative group (25) comprises a counter-sealing element (42) of the respective sealing device (23);
wherein the first support portion (31) comprises a plurality of first fixing points (36) and the second support portion (32) comprises a plurality of second fixing points (37) ;
wherein if the sealing device (23) is of the first type, the first operative group (24) is fixed to the first support portion (31) at the first fixing points (36) and the second operative group (25) is fixed to the second support portion (32) at the second fixing points (37),
**characterized in that**
the package forming apparatus (10) is configured to be selectively equipped with one or more transversal sealing devices (23) of a second type different from the first type,
wherein if the sealing device (23) is of the second type, the first operative group (24) is fixed to the second support portion (32) at the second fixing points (37) and the second operative group (25) is fixed to the first support portion (31) at the first fixing points (36).

2. Package forming apparatus according to claim 1, wherein each sealing device (23) of the first type is configured to transversally seal the tube (4) by means of ultrasonic sealing and wherein each sealing device (23) of the second type is configured to transversally seal the tube (4) by induction heating.

3. Package forming apparatus according to claim 1 or 2, wherein the first fixing points (36) are different from the second fixing points (37) and/or a relative arrangement of the first fixing points (36) with respect to one another is different from a relative arrangement of the second fixing points (37) with respect to one another.

4. Package forming apparatus according to any one of the preceding claims, wherein the first support portion (31) and the second support portion (32) are movable between a first position in which the first support portion (31) and the second support portion (32) are withdrawn from one another and a second position in which the first support portion (31) and the second support portion (32) are approached to one another;
wherein the first operative group (24) and the second operative group (25) move together with the first support portion (31) and the second support portion (32).

5. Package forming apparatus according to any one of the preceding claims, wherein the first operative group (24) comprises a first connecting bar (38) and the second operative group (25) comprises a second connecting bar (39);
wherein if the sealing device (23) is of the first type the first connecting bar (38) is mounted to the first support portion (31) at the first fixing positions (36) and the second connecting bar (39) is mounted to the second support portion (32) at the second fixing positions (37) and if the sealing device (23) is of the second type the first connecting bar (38) is mounted to the second support portion (32) at the second fixing positions (37) and the second connecting bar (39) is mounted to the first support portion (31) at the first fixing positions (36).

6. Package forming apparatus according to claim 5, wherein the first connecting bar (38) comprises a first engagement surface and the second connecting bar (39) comprises a second engagement surface;
wherein the first support portion (31) comprises a first abutment surface and the second support portion (32) comprises a second abutment surface;
wherein if the sealing device (23) is of the first type, the first engagement surface engages the first abutment surface and the second engagement surface engages the second abutment surface and if the sealing device (23) is of the second type the first engagement surface engages the second abutment surface and the second engagement surface engages the first abutment surface.

7. Package forming apparatus according to claim 5 or 6, wherein each first connecting bar (38) comprises a plurality of first through-holes and each second connecting bar (39) comprises a plurality of second through-holes;
wherein if the sealing device (32) is of the first type, each first through-hole is aligned with respect to one respective first fixing point (36) and each second through-hole is aligned with respect to one respective second fixing point (37) and if the sealing device (23) is of the second type, each first through-hole is aligned with respect to one respective second fixing point (37) and each second through-hole is aligned with respect to one respective first fixing point (36).

8. Package forming apparatus according to any one of the preceding claims, wherein the second operative group (25) comprises:
- a pair of movable interaction tabs (43), the pair of interaction tabs (43) being configured to interact, in use, with the tube (4) from opposite sides thereof and being configured to move with respect to one another; and
- an actuating device (44) coupled to the pair of interaction tabs (43) and being configured to actuate movement of the interaction tabs (43);
wherein the actuating device (44) comprises a control bar (45) coupled to the pair of interaction tabs (43) for actuating movement of the pair of interaction tabs (43);
wherein the first support portion (31) comprises a plurality of first attachment points (50) and the second support portion (32) comprises a plurality of second attachment points (51);
wherein the control bar (45) is mounted to the first support portion (31) at the first attachment points (50) if the sealing device (23) is of the second type and the control bar (45) is mounted to the second support portion (32) at the second attachment points (51) if the sealing device (32) is of the first type.

9. Package forming apparatus according to claim 8, wherein the first attachment points (50) and the second attachments (51) are mirror symmetric with respect to a mirror axis (E).

10. Package forming apparatus according to claim 9, wherein the carrier (30) is movable along a linear direction (D) and the mirror axis (E) is parallel to the linear direction (D); and/or
wherein the support structure (26) extends along a longitudinal axis (B) and the mirror axis (E) is parallel to the longitudinal axis (B); and/or
wherein the support structure (26) comprises at least a first guide (28) and a second guide (29) and the carrier (30) is movably coupled to the first guide (28) and the second guide (29) and the mirror axis (E) is parallel to the first guide (28) and the second guide (29).

11. Package forming apparatus according to any one of the preceding claims, wherein the support structure (26) comprises a first guide (28) and a second guide (29) spaced apart from the first guide (28);
wherein the carrier (30) is movably coupled to the first guide (28) and the second guide (29) and comprises at least:
- a first coupling structure (52) and a second coupling structure (53) coupling the carrier (30), respectively, to the first guide (28) and the second guide (29);
wherein the carrier (30) comprises a support plate (56) having a first connecting area (57) and a second connecting area (58);
wherein the second coupling structure (53) comprises a first portion (54) and a second portion (55);
wherein if the sealing device (23) is of the first type the first portion (54) is connected to the support plate (56) at the first connecting area (57) and the second portion (55) is connected to the support plate (56) at the second connecting area (58) and if the sealing device (23) is of the second type the first portion (54) is connected to the support plate (56) at the second connecting area (58) and the second portion (55) is connected to the support plate (56) at the first connecting area (57).

12. Package forming apparatus according to claim 11, wherein the first connecting area (57) and the second connecting area (58) are mirror symmetric with respect to a respective symmetry axis (F).

13. Package forming apparatus according to any one of the preceding claims, wherein each second operative group (25) comprises a cutting blade configured to transversally cut the tube (4).

14. Package forming apparatus according to any one of the preceding claims, and further comprising a conveying unit configured to advance the first operative group (24) and the second operative group (25) along a first advancement path and a second advancement path, respectively.

15. Packaging machine (1) for forming packages (2) of a pourable product from an advancing tube (4) formed and longitudinally sealed from a web of packaging material (4);
the packaging machine (1) comprises:
- a conveying device (11) configured to advance the web of packaging material (3) along a web advancement path (P) and to advance the tube (4) along a tube advancement path (Q) ;
- a tube forming and sealing device (12) configured to form the tube (4) from the web of packaging material (3) and to longitudinally seal the tube (4);
- a filling device (13) for filling the tube (4) with the pourable product; and
- a package forming apparatus (10) according to any one of the preceding claims.

## Patentansprüche

1. Verpackungsformvorrichtung (10) für eine Verpackungsmaschine (1), wobei die Verpackungsformvorrichtung (10) so ausgebildet ist, dass sie einen Schlauch (4) zumindest quer versiegelt, um aus dem Schlauch (4) Verpackungen (2) zu erhalten;
wobei die Verpackungsformvorrichtung (10) so ausgebildet ist, dass sie wahlweise mit einer oder mehreren Quersiegelvorrichtungen (23) eines ersten Typs ausgestattet werden kann;
wobei die Verpackungsformvorrichtung (10) umfasst:
- eine Tragkonstruktion (26); und
- mindestens eine Arbeitsvorrichtung (22), die beweglich mit der Tragkonstruktion (26) verbunden ist und dazu ausgelegt ist, den Schlauch (4) zumindest quer zu versiegeln;
wobei die Arbeitsvorrichtung (22) mindestens umfasst:
- einen Träger (30), der beweglich mit der Tragkonstruktion (26) verbunden ist;
- einen ersten Stützabschnitt (31) und einen zweiten Stützabschnitt (32), die an dem Träger (30) angebracht und relativ zueinander beweglich sind;
- eine erste Arbeitsgruppe (24), die mit einem der ersten Stützabschnitte (31) und dem zweiten Stützabschnitt (33) verbindbar ist; und
- eine zweite Arbeitsgruppe (25), die mit dem jeweils anderen der ersten Stützabschnitte (31) und dem zweiten Stützabschnitt (33) verbindbar ist;
wobei die erste Arbeitsgruppe (24) ein Versiegelungselement (41) der jeweiligen Quersiegelvorrichtung (23) umfasst und die zweite Arbeitsgruppe (25) ein Gegenversiegelungselement (42) der jeweiligen Quersiegelvorrichtung (23) umfasst;
wobei der erste Stützabschnitt (31) eine Vielzahl von ersten Befestigungspunkten (36) umfasst und der zweite Stützabschnitt (32) eine Vielzahl von zweiten Befestigungspunkten (37) umfasst;
wobei, wenn die Quersiegelvorrichtung (23) vom ersten Typ ist, die erste Arbeitsgruppe (24) an den ersten Befestigungspunkten (36) am ersten Stützabschnitt (31) befestigt ist und die zweite Arbeitsgruppe (25) an den zweiten Befestigungspunkten (37) am zweiten Stützabschnitt (32) befestigt ist,
**dadurch gekennzeichnet, dass**
die Verpackungsformvorrichtung (10) so konfiguriert ist, dass sie wahlweise mit einer oder mehreren Quersiegelvorrichtungen (23) eines zweiten Typs ausgestattet werden kann, der sich vom ersten Typ unterscheidet,
wobei, wenn die Quersiegelvorrichtung (23) vom zweiten Typ ist, die erste Arbeitsgruppe (24) an den zweiten Befestigungspunkten (37) am zweiten Stützabschnitt (32) befestigt ist und die zweite Arbeitsgruppe (25) an den ersten Befestigungspunkten (36) am ersten Stützabschnitt (31) befestigt ist.

2. Verpackungsformvorrichtung nach Anspruch 1, wobei jede Quersiegelvorrichtung (23) des ersten Typs so ausgelegt ist, dass sie den Schlauch (4) mittels Ultraschallsiegelung quer versiegelt, und wobei jede Quersiegelvorrichtung (23) des zweiten Typs so ausgelegt ist, dass sie den Schlauch (4) durch Induktionserwärmung quer versiegelt.

3. Verpackungsformvorrichtung nach Anspruch 1 oder 2, wobei sich die ersten Befestigungspunkte (36) von den zweiten Befestigungspunkten (37) unterscheiden und/oder sich eine relative Anordnung der ersten Befestigungspunkte (36) zueinander von einer relativen Anordnung der zweiten Befestigungspunkte (37) zueinander unterscheidet.

4. Verpackungsformvorrichtung nach einem der vorstehenden Ansprüche, wobei der erste Stützabschnitt (31) und der zweite Stützabschnitt (32) zwischen einer ersten Position, in der der erste Stützabschnitt (31) und der zweite Stützabschnitt (32) voneinander zurückgezogen sind, und einer zweiten Position, in der der erste Stützabschnitt (31) und der zweite Stützabschnitt (32) einander angenähert sind, bewegbar sind;
wobei sich die erste Arbeitsgruppe (24) und die zweite Arbeitsgruppe (25) gemeinsam mit dem ersten Stützabschnitt (31) und dem zweiten Stützabschnitt (32) bewegen.

5. Verpackungsformvorrichtung nach einem der vorstehenden Ansprüche, wobei die erste Arbeitsgruppe (24) eine erste Verbindungsstange (38) und die zweite Arbeitsgruppe (25) eine zweite Verbindungsstange (39) umfasst;
wobei, wenn die Quersiegelvorrichtung (23) vom ersten Typ ist, die erste Verbindungsstange (38) an den ersten Befestigungspunkten (36) am ersten Stützabschnitt (31) angebracht ist und die zweite Verbindungsstange (39) an den zweiten Befestigungspunkten (37) am zweiten Stützabschnitt (32) angebracht ist, und wenn die Quersiegelvorrichtung (23) vom zweiten Typ ist, die erste Verbindungsstange (38) an den zweiten Befestigungspunkten (37) am zweiten Stützabschnitt (32) angebracht ist und die zweite Verbindungsstange (39) an den ersten Befestigungspunkten (36) am ersten Stützabschnitt (31) angebracht ist.

6. Verpackungsformvorrichtung nach Anspruch 5, wobei die erste Verbindungsstange (38) eine erste Eingriffsfläche und die zweite Verbindungsstange (39) eine zweite Eingriffsfläche aufweist;
wobei der erste Stützabschnitt (31) eine erste Anlagefläche und der zweite Stützabschnitt (32) eine zweite Anlagefläche aufweist;
wobei, wenn die Quersiegelvorrichtung (23) vom ersten Typ ist, die erste Eingriffsfläche mit der ersten Anlagefläche in Eingriff steht und die zweite Eingriffsfläche mit der zweiten Anlagefläche in Eingriff steht, und wenn die Quersiegelvorrichtung (23) vom zweiten Typ ist, die erste Eingriffsfläche mit der zweiten Anlagefläche in Eingriff steht und die zweite Eingriffsfläche mit der ersten Anlagefläche in Eingriff steht.

7. Verpackungsformvorrichtung nach Anspruch 5 oder 6, wobei jede erste Verbindungsstange (38) eine Vielzahl von ersten Durchgangslöchern und jede zweite Verbindungsstange (39) eine Vielzahl von zweiten Durchgangslöchern aufweist;
wobei, wenn die Quersiegelvorrichtung (32) vom ersten Typ ist, jedes erste Durchgangsloch in Bezug auf einen jeweiligen ersten Befestigungspunkt (36) ausgerichtet ist und jedes zweite Durchgangsloch in Bezug auf einen jeweiligen zweiten Befestigungspunkt (37) ausgerichtet ist, und wenn die Quersiegelvorrichtung (23) vom zweiten Typ ist, jedes erste Durchgangsloch in Bezug auf einen jeweiligen zweiten Befestigungspunkt (37) ausgerichtet ist und jedes zweite Durchgangsloch in Bezug auf einen jeweiligen ersten Befestigungspunkt (36) ausgerichtet ist.

8. Verpackungsformvorrichtung nach einem der vorstehenden Ansprüche, wobei die zweite Arbeitsgruppe (25) umfasst:
- ein Paar beweglicher Interaktionslaschen (43), die so ausgebildet sind, dass sie im Betrieb von gegenüberliegenden Seiten mit dem Schlauch (4) in Wechselwirkung treten und sich relativ zueinander bewegen können; und
- eine Betätigungsvorrichtung (44), die mit dem Paar Interaktionslaschen (43) gekoppelt ist und so ausgebildet ist, dass sie die Bewegung der Interaktionslaschen (43) betätigt;
wobei die Betätigungsvorrichtung (44) eine Steuerstange (45) umfasst, die mit dem Paar Interaktionslaschen (43) verbunden ist, um deren Bewegung zu bewirken;
wobei der erste Stützabschnitt (31) eine Vielzahl von ersten Anschlusspunkten (50) umfasst und der zweite Stützabschnitt (32) eine Vielzahl von zweiten Anschlusspunkten (51) umfasst;
wobei die Steuerstange (45) an den ersten Anschlusspunkten (50) am ersten Stützabschnitt (31) angebracht ist, wenn die Quersiegelvorrichtung (23) vom zweiten Typ ist, und die Steuerstange (45) an den zweiten Anschlusspunkten (51) am zweiten Stützabschnitt (32) angebracht ist, wenn die Quersiegelvorrichtung (32) vom ersten Typ ist.

9. Verpackungsformvorrichtung nach Anspruch 8, wobei die ersten Anschlusspunkte (50) und die zweiten Anschlusspunkte (51) in Bezug auf eine Spiegelachse (E) spiegelsymmetrisch sind.

10. Verpackungsformvorrichtung nach Anspruch 9, wobei der Träger (30) entlang einer linearen Richtung (D) bewegbar ist und die Spiegelachse (E) parallel zur linearen Richtung (D) verläuft; und/oder
wobei sich die Tragkonstruktion (26) entlang einer Längsachse (B) erstreckt und die Spiegelachse (E) parallel zur Längsachse (B) verläuft; und/oder
wobei die Tragkonstruktion (26) mindestens eine erste Führung (28) und eine zweite Führung (29) umfasst und der Träger (30) beweglich mit der ersten Führung (28) und der zweiten Führung (29) gekoppelt ist und die Spiegelachse (E) parallel zur ersten Führung (28) und zur zweiten Führung (29) verläuft.

11. Verpackungsformvorrichtung nach einem der vorstehenden Ansprüche, wobei die Tragkonstruktion (26) eine erste Führung (28) und eine zweite Führung (29) umfasst, die von der ersten Führung (28) beabstandet ist;
wobei der Träger (30) beweglich mit der ersten Führung (28) und der zweiten Führung (29) verbunden ist und mindestens umfasst:
- eine erste Kupplungsstruktur (52) und eine zweite Kupplungsstruktur (53), die den Träger (30) jeweils mit der ersten Führung (28) und der zweiten Führung (29) koppeln;
wobei der Träger (30) eine Trägerplatte (56) mit einem ersten Verbindungsbereich (57) und einem zweiten Verbindungsbereich (58) umfasst;
wobei die zweite Kupplungsstruktur (53) einen ersten Abschnitt (54) und einen zweiten Abschnitt (55) umfasst;
wobei, wenn die Quersiegelvorrichtung (23) vom ersten Typ ist, der erste Abschnitt (54) an dem ersten Verbindungsbereich (57) mit der Trägerplatte (56) verbunden ist und der zweite Abschnitt (55) an dem zweiten Verbindungsbereich (58) verbunden ist, und wenn die Quersiegelvorrichtung (23) vom zweiten Typ ist, der erste Abschnitt (54) an dem zweiten Verbindungsbereich (58) mit der Trägerplatte (56) verbunden ist und der zweite Abschnitt (55) an dem ersten Verbindungsbereich (57) mit der Trägerplatte (56) verbunden ist.

12. Verpackungsformvorrichtung nach Anspruch 11, wobei der erste Verbindungsbereich (57) und der zweite Verbindungsbereich (58) in Bezug auf eine jeweilige Symmetrieachse (F) spiegelsymmetrisch sind.

13. Verpackungsformvorrichtung nach einem der vorstehenden Ansprüche, wobei jede zweite Arbeitsgruppe (25) eine Schneidklinge umfasst, die so ausgebildet ist, dass sie den Schlauch (4) quer schneidet.

14. Verpackungsformvorrichtung nach einem der vorstehenden Ansprüche, die ferner eine Fördereinheit umfasst, die so ausgebildet ist, dass sie die erste Arbeitsgruppe (24) und die zweite Arbeitsgruppe (25) entlang eines ersten Förderwegs bzw. eines zweiten Förderwegs vorwärtsbewegt.

15. Verpackungsmaschine (1) zum Bilden von Verpackungen (2) eines schüttfähigen Produkts aus einem vorlaufenden Schlauch (4), der aus einer Bahn aus Verpackungsmaterial (4) gebildet und in Längsrichtung versiegelt ist;
die Verpackungsmaschine (1) umfasst:
- eine Fördereinrichtung (11), die so ausgelegt ist, dass sie die Verpackungsmaterialbahn (3) entlang eines Bahnförderwegs (P) und den Schlauch (4) entlang eines Schlauchförderwegs (Q) vorwärtsbewegt;
- eine Schlauchform- und -versiegelungsvorrichtung (12), die so ausgelegt ist, dass sie den Schlauch (4) aus der Verpackungsmaterialbahn (3) formt und den Schlauch (4) in Längsrichtung versiegelt;
- eine Füllvorrichtung (13) zum Befüllen des Schlauchs (4) mit dem schüttfähigen Produkt; und
- eine Verpackungsformvorrichtung (10) nach einem der vorstehenden Ansprüche.

## Revendications

1. Appareil de formation d'emballages (10) destiné à une machine d'emballage (1), l'appareil de formation d'emballages (10) étant configuré pour sceller au moins transversalement un tube (4) afin d'obtenir des emballages (2) à partir du tube (4) ;
dans lequel l'appareil de formation d'emballages (10) est configuré pour être équipé de manière sélective d'un ou plusieurs dispositifs de scellage transversal (23) d'un premier type;
dans lequel l'appareil de formation d'emballages (10) comprend :
- une structure de support (26) ; et
- au moins un dispositif opérationnel (22) couplé de manière mobile à la structure de support (26) et configuré pour sceller au moins transversalement le tube (4) ;
dans lequel le dispositif opérationnel (22) comprend au moins :
- un support (30) couplé de manière mobile à la structure de support (26) ;
- une première partie de support (31) et une deuxième partie de support (32) montées sur le support (30) et pouvant se déplacer l'une par rapport à l'autre ;
- un premier groupe opérationnel (24) pouvant être relié à l'une de la première partie de support (31) et de la deuxième partie de support (33) ; et
- un deuxième groupe opérationnel (25) pouvant être relié à l'autre partie parmi la première partie de support (31) et la deuxième partie de support (33) ;
dans lequel le premier groupe opérationnel (24) comprend un élément de scellage (41) du dispositif de scellage (23) correspondant et le deuxième groupe opérationnel (25) comprend un élément de contre-scellage (42) du dispositif de scellage (23) correspondant ;
dans lequel la première partie de support (31) comprend une pluralité de premiers points de fixation (36) et la deuxième partie de support (32) comprend une pluralité de deuxièmes points de fixation (37) ;
dans lequel, si le dispositif de scellage (23) est du premier type, le premier groupe opérationnel (24) est fixé à la première partie de support (31) au niveau des premiers points de fixation (36) et le deuxième groupe opérationnel (25) est fixé à la deuxième partie de support (32) au niveau des deuxièmes points de fixation (37),
**caractérisé en ce que**
l'appareil de formation d'emballages (10) est configuré pour être équipé de manière sélective d'un ou plusieurs dispositifs de scellage transversal (23) d'un deuxième type différent du premier type,
dans lequel, si le dispositif de scellage (23) est du deuxième type, le premier groupe opérationnel (24) est fixé à la deuxième partie de support (32) au niveau des deuxièmes points de fixation (37) et le deuxième groupe opérationnel (25) est fixé à la première partie de support (31) au niveau des premiers points de fixation (36).

2. Appareil de formation d'emballages selon la revendication 1, dans lequel chaque dispositif de scellage (23) du premier type est configuré pour sceller transversalement le tube (4) au moyen d'un scellage ultrasonique, et dans lequel chaque dispositif de scellage (23) du deuxième type est configuré pour sceller transversalement le tube (4) par chauffage par induction.

3. Appareil de formation d'emballages selon la revendication 1 ou 2, dans lequel les premiers points de fixation (36) sont différents des seconds points de fixation (37) et/ou une disposition relative des premiers points de fixation (36) les uns par rapport aux autres est différente d'une disposition relative des seconds points de fixation (37) les uns par rapport aux autres.

4. Appareil de formation d'emballages selon l'une quelconque des revendications précédentes, dans lequel la première partie de support (31) et la deuxième partie de support (32) sont mobiles entre une première position dans laquelle elles sont écartées l'une de l'autre et une deuxième position dans laquelle elles sont rapprochées l'une de l'autre ;
dans lequel le premier groupe opérationnel (24) et le deuxième groupe opérationnel (25) se déplacent conjointement avec la première partie de support (31) et la deuxième partie de support (32).

5. Appareil de formation d'emballages selon l'une quelconque des revendications précédentes, dans lequel le premier groupe opérationnel (24) comprend une première barre de liaison (38) et le deuxième groupe opérationnel (25) comprend une deuxième barre de liaison (39) ;
dans lequel, si le dispositif de scellage (23) est du premier type, la première barre de liaison (38) est montée sur la première partie de support (31) au niveau des premières positions de fixation (36) et la deuxième barre de liaison (39) est montée sur la deuxième partie de support (32) au niveau des deuxièmes positions de fixation (37), et si le dispositif de scellage (23) est du deuxième type, la première barre de liaison (38) est montée sur la deuxième partie de support (32) au niveau des deuxièmes positions de fixation (37) et la deuxième barre de liaison (39) est montée sur la première partie de support (31) au niveau des premières positions de fixation (36).

6. Appareil de formation d'emballages selon la revendication 5, dans lequel la première barre de liaison (38) comprend une première surface d'engagement et la deuxième barre de liaison (39) comprend une deuxième surface d'engagement ;
dans lequel la première partie de support (31) comprend une première surface de butée et la deuxième partie de support (32) comprend une deuxième surface de butée ;
dans lequel, si le dispositif de scellage (23) est du premier type, la première surface d'engagement s'engage avec la première surface de butée et la deuxième surface d'engagement s'engage avec la deuxième surface de butée, et si le dispositif de scellage (23) est du deuxième type, la première surface d'engagement s'engage avec la deuxième surface de butée et la deuxième surface d'engagement s'engage avec la première surface de butée.

7. Appareil de formation d'emballages selon la revendication 5 ou 6, dans lequel chaque première barre de connexion (38) comprend une pluralité de premiers trous traversants et chaque deuxième barre de connexion (39) comprend une pluralité de deuxièmes trous traversants ;
dans lequel, si le dispositif de scellage (32) est du premier type, chaque premier trou traversant est aligné par rapport à un premier point de fixation respectif (36) et chaque deuxième trou traversant est aligné par rapport à un deuxième point de fixation respectif (37), et si le dispositif de scellage (23) est du deuxième type, chaque premier trou traversant est aligné par rapport à un deuxième point de fixation respectif (37) et chaque deuxième trou traversant est aligné par rapport à un premier point de fixation respectif (36).

8. Appareil de formation d'emballages selon l'une quelconque des revendications précédentes, dans lequel le deuxième groupe opérationnel (25) comprend :
- une paire de languettes d'interaction mobiles (43) configurées pour interagir avec le tube (4) à partir de ses côtés opposés et pour se déplacer l'une par rapport à l'autre ; et
- un dispositif d'actionnement (44) couplé à la paire de languettes d'interaction (43) et configuré pour actionner leur mouvement ;
dans lequel le dispositif d'actionnement (44) comprend une barre de commande (45) reliée à la paire de languettes d'interaction (43) ;
dans lequel la première partie de support (31) comprend une pluralité de premiers points de fixation (50) et la deuxième partie de support (32) comprend une pluralité de deuxièmes points de fixation (51) ;
dans lequel la barre de commande (45) est montée sur la première partie de support (31) au niveau des premiers points de fixation (50) si le dispositif de scellage (23) est du deuxième type, et sur la deuxième partie de support (32) au niveau des deuxièmes points de fixation (51) si le dispositif de scellage (32) est du premier type.

9. Appareil de formation d'emballages selon la revendication 8, dans lequel les premiers points de fixation (50) et les seconds points de fixation (51) sont symétriques par rapport à un axe de symétrie (E).

10. Appareil de formation d'emballages selon la revendication 9, dans lequel le support (30) est mobile selon une direction linéaire (D) et l'axe (E) est parallèle à celle-ci ; et/ou
dans lequel la structure de support (26) s'étend le long d'un axe longitudinal (B) et l'axe (E) lui est parallèle ; et/ou
dans lequel la structure de support (26) comprend un premier guide (28) et un deuxième guide (29) et le support (30) est couplé de manière mobile à ceux-ci, l'axe (E) leur étant parallèle.

11. Appareil de formation d'emballages selon l'une quelconque des revendications précédentes, dans lequel la structure de support (26) comprend un premier guide (28) et un deuxième guide (29) espacé du premier ;
dans lequel le support (30) est couplé de manière mobile aux guides et comprend :
- une première et une deuxième structure d'accouplement (52, 53) ;
dans lequel le support (30) comprend une plaque de support (56) avec une première et une deuxième zone de connexion (57, 58) ;
dans lequel la deuxième structure d'accouplement (53) comprend deux parties (54, 55) ;
dans lequel les connexions sont inversées selon le type de dispositif de scellage (23).

12. Appareil de formation d'emballages selon la revendication 11, dans lequel les zones de connexion (57, 58) sont symétriques par rapport à un axe (F).

13. Appareil de formation d'emballages selon l'une quelconque des revendications précédentes, dans lequel chaque deuxième groupe opérationnel (25) comprend une lame de coupe.

14. Appareil de formation d'emballages selon l'une quelconque des revendications précédentes, comprenant en outre une unité de transport pour déplacer les groupes opérationnels.

15. Machine d'emballage (1) pour former des emballages (2) d'un produit versable à partir d'un tube (4) formé à partir d'une bande de matériau (4) ;
la machine comprend:
- un dispositif de transport (11) ;
- un dispositif de formation de tube (12) ;
- un dispositif de remplissage (13) ; et
- un appareil de formation d'emballages (10) selon l'une quelconque des revendications précédentes.
